# EUROPEAN PATENT SPECIFICATION

(11) **EP 1 993 223 B1**
(45) Date of publication and mention of the grant of the patent: **04.05.2016**
(21) Application number: 07800979.2
(22) Date of filing: 16.08.2007
(51) Int. Cl.: H04J 14/02, H04B 1/74

(54) **METHOD AND DEVICE OF GROUP BROADCAST PROTECTION IN WDM OPTICAL NETWORK**
VERFAHREN UND VORRICHTUNG ZUR SICHERUNG VON GRUPPENRUNDRUF IN EINEM OPTISCHEN WDM NETZWERK
PROCÉDÉ ET DISPOSITIF DE PROTECTION DE DIFFUSION DE GROUPE DANS UN RÉSEAU OPTIQUE À MULTIPLEXAGE PAR DIVISION DE LONGUEUR D'ONDE

(30) Priority: 21.11.2006 CN 200610145781
(43) Date of publication of application: 19.11.2008
(73) Proprietor: Huawei Technologies Co., Ltd., Longgang District Shenzhen, Guangdong 518129 (CN); University Of Electronic Science And Technology Of China, Sichuan 610054 (CN)
(72) Inventor: LU, Cai, Chengdu Sichuan 610054 (CN); LI, Lemin, Chengdu Sichuan 610054 (CN); XU, Huiying, Shenzhen Guangdong 518129 (CN); YU, Hongfang, Chengdu Sichuan 610054 (CN); LUO, Hongbin, Shenzhen 518129 Kina (CN)
(74) Representative: Thun, Clemens
(86) International application number: PCT/CN2007/070503
(87) International publication number: WO 2008/061461

(56) References cited:
- CN-A- 1 472 968
- CN-A- 1 588 890
- CN-A- 1 773 947
- CN-A- 1 790 960
- CN-A- 1 790 960
- US-A1- 2002 163 685
- AHMAD KHALIL ET AL: "Dynamic Provisioning of Survivable Heterogeneous Multicast and Unicast Traffic in WDM Networks", COMMUNICATIONS, 2006. ICC '06. IEEE INTERNATIONAL CONFERENCE ON, IEEE, PI, 1 June 2006 (2006-06-01), pages 2465-2470, XP031025435, ISBN: 978-1-4244-0354-7
- NILADHURI SREENATH ET AL: "Protecting Multicast Sessions from Link and Node Failures in Sparse-Splitting WDM Networks", 1 January 2005 (2005-01-01), DISTRIBUTED COMPUTING - IWDC 2005 LECTURE NOTES IN COMPUTER SCIENCE;;LNCS, SPRINGER, BERLIN, DE, PAGE(S) 195 - 200, XP019026565, ISBN: 978-3-540-30959-8 * the whole document *
- YING ZHANG ET AL: "A multicast protection algorithm for optical WDM networks", COMPUTER COMMUNICATIONS AND NETWORKS, 2004. ICCCN 2004. PROCEEDINGS. 1 3TH INTERNATIONAL CONFERENCE ON CHICAGO, IL, USA 11-13 OCT. 2004, PISCATAWAY, NJ, USA,IEEE, 11 October 2004 (2004-10-11), pages 315-320, XP010774533, DOI: 10.1109/ICCCN.2004.1401656 ISBN: 978-0-7803-8814-7

## Description

### Field of the Invention

The present invention relates to WDM optical network technologies and in particular to a multicast protection technology in a WDM optical network.

### Background of the Invention

As Wavelength Division Multiplexing (WDM) optical network applications are popularized rapidly, networking technologies and service provision technologies in WDM optical networks regarded as a support for the future Internet backbone have gained increasing attentions. On the other hand, as optical technologies get matured and various optical communication devices/apparatus with improved functions emerge, increasing tasks originally required to be accomplished in a service switching layer have been transferred to the optical layer. A typical example is optical network multicast technologies, which have been gaining popular attentions in recent years. Here, the multicast refers to data transmission from a single source to multi-destinations.

In a WDM optical network, implementation of multicast depends upon a technical support from hardware devices. The well-known Splitter and Delivery (SaD) switching module can support the implementation of multicast. The SaD switching module can split one wavelength resource into a plurality of wavelength resources of the same wavelength, and also can split one wavelength resource into a plurality of wavelength resources of different wavelengths. The SaD switching module can also be used to build a Multicast Capable Optical Cross Connection (OXC) of any scale, which can also be referred to as MC-OXC and is primarily used to implement optical crossing. In addition, a device capable of Tap and Continuation (TaC) can also support the implementation of multicast. The TaC capable device can output partial power of an optical signal to a local electric port (if the device is located at one of multicast destination nodes), while the remaining power proceeds with transmission along a light path (i.e., a transparent wavelength channel across a plurality of OXC devices), here, no light splitter is required, and therefore a multicast path is not of a tree-shaped structure, but a light path starting from a source node and passing through all multicast destination nodes. The use of the SaD and TaC devices can extend the concept of a light path to a light tree, an essential idea of which lies in that an OXC is provided with a light splitter or power splitter, so that an all optical transparent tree-shaped channel at a wavelength level is built, thereby implementing point-to-multipoint all optical multicast.

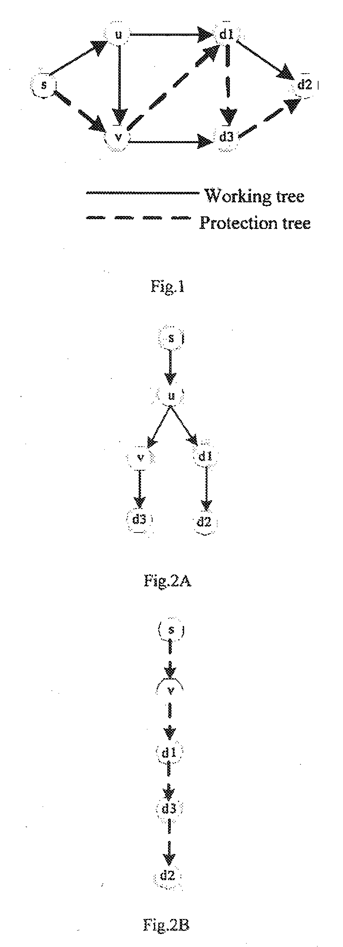

Figure 1 is a schematic diagram of multicast data transmission. As illustrated in Figure 1, a source node s transmits data to destination nodes d1, d2 and d3 respectively, nodes s and u may be referred to as intermediate nodes, an edge between every two nodes is referred to as a link, each link is provided with at least one wavelength resource, and a channel from the source node to any destination node and consisted of at least one link is referred to as a path, for instance, path s->u->d1 is a path from the node s to the node d1.

In practice, a link may malfunction or fail due to various reasons, and if there is only one path from a source node to a destination node, the path will fail as the link fails, thus resulting in data transmission blocking. To avoid such a case, one skilled in the art can adopt a technical approach of dual paths from the source node to the destination node. In other words, not only a working path for normal operation is present from the source node to the destination node, but also a protection path acting as a backup is present from the source node to the destination node, and links on the protection path are totally different from those on the working path. When the working path fails, the source node can transmit data to the destination node through the protection path. As illustrated in Figure 1, a path as indicated by solid lines is a working path, and a path as indicated by broken lines is a protection path. Normally, a working path from the node s to the node d1 is path s->u->d1, and when this working path fails, data is transmitted through a protection path s->v->d1.

Currently, there are various solutions of building a working path and a protection path between a source node and a destination node, and one of these solutions is link-disjoint dual-tree protection method, the essential idea of which lies in that a working tree and a protection tree are built sequentially for each multicast request, each working path or protection path in the working tree or the protection tree is the shortest working path or protection path from a source node to a corresponding destination node, and links in the working tree are separate from those in the protection tree. If any of the links in the working tree fails, data can be switched to the protection tree for transmission.

As illustrated in Figure 1, it is assumed that a multicast request is such that the node s will transmit data respectively to the nodes d1, d2 and d3. With a precondition that links are known, a working tree as illustrated in Figure 2A is built, including respective working paths from the node s to the nodes d1, d2 and d3; and a protection tree as illustrated in Figure 2B is built, including respective protection paths from the node s to the nodes d1, d2 and d3. If the working path from the node s to the node d1 fails, data from the node s to the node d1 can be transferred to the corresponding protection path in the protection tree so as to be transmitted.

The link-disjoint dual-tree protection method is simple and intuitive, and has a relative low algorithm complexity. However, one-off building of a working tree may occupy relatively numerous network resources, and a link of a protection path shall not be identical to that of a working path, in this case, so few options are available for a protection path that the probability of successful building of a protection path may be relatively low, and hence that the blocking probability in the network may be relatively high.

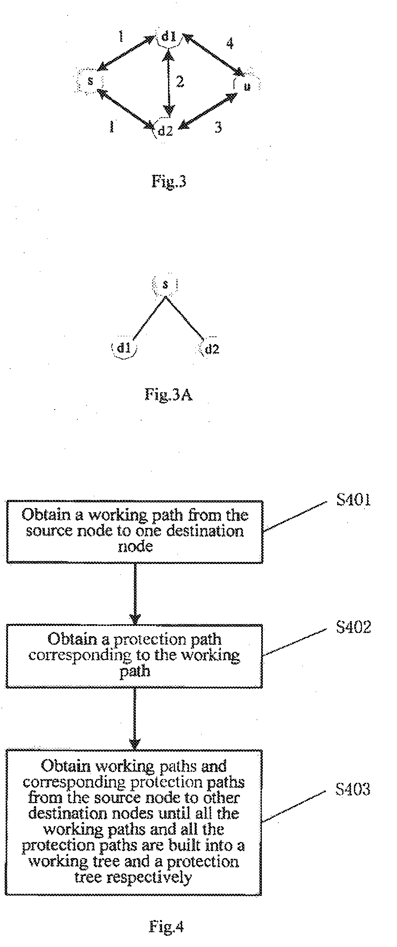

As illustrated in Figure 3 showing a schematic diagram of multicast data transmission, it is assumed that a multicast request is such that the node s will transmit data respectively to the nodes d1 and d2, where costs for path s->d1 and path s->d2 are 1 respectively, costs for path d1->d2 and path d2->d1 are 2 respectively, costs for path d2->u and path u->d2 are 3 respectively, and costs for path d1->u and path u->d1 are 4 respectively. When the link-disjoint dual-tree protection method is used to build a working tree, because paths with the lowest cost (i.e., the shortest working paths) from the node s to the node d1 and d2 are path s->d1 and path s->d2 respectively, the working tree as illustrated in Figure 3A is built. For building of a protection tree, however, no protection path from the node s to the nodes d1 and d2 can be found because path s->d1 and path s->d2 have been used as working paths, and hence no protection tree can be built.

Consequently, the link-disjoint dual-tree protection method occupies relatively numerous network resources in building of a working tree, so that the probability of successful building of a protection path may be relatively low, and further that the blocking probability in the network may be relatively high.
In the paper of "Dynamic Provisioning of Survivable Heterogeneous Multicast and Unicast Traffic in WDM Networks" (by Ahmad Khalil et.al, communications, 2006.ICC'06. IEEE international conference on, IEEE, PI, 1 June 2006, pages 2465-2470, XP031025435, ISBN: 978-1-4244-0354-7), the presence of both unicast and multicast traffic in future optical networks is expected. The paper studies the problem of dynamic provisioning of survivable heterogeneous unicast and multicast traffic in WDM networks. New protection schemes to provision and protect unicast and multicast connection requests against single-link failures in WDM-mesh networks are proposed.
CN1790960A discloses a MSPP method in WDM network, which comprises: accepting business request, building work path and opposite protective path, checking all links, and updating reserved and mixed resource. Compared with SPP method, this invention can save more wavelength resource, increases level of resources utilization, and reduce network congestion rate.
In the paper of "Protecting Multicast Sessions from Link and Node Failure in Sparse-Splitting WDM Networks" (by Niladhuri Sreenath et al, 2005-01-01, distributed computing-IWDC 2005 lecture notes in computer science, LNCS 3741, pp. 195-200, 2005), algorithms are proposed for protecting multicast sessions against failure of network components such as links and nodes in a network with sparse splitting and sparse wavelength conversion.
The paper of "A Multicast Protection Algorithm for Optical WDM Network" (by Ying Zhang, computer communications and networks, 2004. ICCCN 2004. proceedings. 13th international conference on Chicago, IL, USA 11-13 Oct. 2004, Piscataway, NJ, USA, IEEE, 2004-10-11, pages 315-320, XP010774533, DOI: 10.1109/ICCCN. 2004. 1401656 ISBN:978-7803-8814-7) studies the problem of constructing a minimum-cost, two-connected subgraph, satisfying the wavelength conversion constraint, for a multicast request in a WDM network. The paper proposes a routing and wavelength assignment subgraph but also to reduce the number of wavelength conversions in the networks.

### Summary of the Invention

The present invention provides a multicast protection method and a device for a WDM optical network as defined in the appended independent claims, in order to lower the blocking probability in the network.

The embodiments of the invention provide the following solutions.

A multicast protection method in a WDM optical network includes:
obtaining a working path from a source node to one of destination nodes; obtaining a protection path corresponding to the working path; and
repeating the above steps until working paths and corresponding protection paths from the source node to all the destination nodes are obtained:
   wherein if at least one working path has been obtained, process of obtaining a working path from a source node to one of destination nodes comprises:
      selecting a shortest working path among candidate working paths from all nodes on the obtained working path to the destination node, and a source node of the shortest working path, wherein the shortest working path is a candidate working path with the lowest cost among the candidate working paths from all the nodes on the obtained working path to the destination node, and the source node of the shortest working path is such a node on the obtained working path that a candidate working path from the node to the destination node has the lowest cost; and
      combining the shortest working path and a working path from the source node to the source node of the shortest working path into the working path from the source node to the destination node.

A multicast protection device in a WDM optical network includes:
a path obtaining element adapted to obtain a working path from a source node to one destination node and a protection path corresponding to the working path, wherein if at least one working path has been obtained, process of obtaining a working path from a source node to one of destination nodes comprises: selecting a shortest working path among candidate working paths from all nodes on the obtained working path to the destination node, and a source node of the shortest working path, wherein the shortest working path is a candidate working path with the lowest cost among the candidate working paths from all the nodes on the obtained working path to the destination node, and the source node of the shortest working path is such a node on the obtained working path that a candidate working path from the node to the destination node has the lowest cost; and combining the shortest working path and a working path from the source node to the source node of the shortest working path into the working path from the source node to the destination node; and
a completion determining element adapted to determine whether working paths and corresponding protection paths from the source node to all destination nodes have been obtained; and if so, adapted to proceed with ending; otherwise, adapted to instruct the path obtaining element to proceed to a destination node in a multicast service, for which no path has been obtained.

The embodiments of the invention has the following advantages over the prior art:

In the embodiments of the invention, each time one working path is obtained, subsequently a protection path corresponding to the working path is obtained, thereby avoiding such a situation that all working paths are firstly built into a working tree with relatively numerous network resources being occupied as a result of which a protection tree may not be build successfully. Therefore, the blocking probability in the network can be lowered with the embodiments of the invention.

In the embodiments of the invention, if possible, the shortest path is preferably selected as a working path or a protection path, and thus it can be ensured that the cost of the selected working path or the protection path is the lowest.

In the embodiments of the invention, if possible, a node provided with a wavelength converter and/or a light splitter is preferably selected as a node in a working path or a protection path. The wavelength converter and/or the light splitter is capable of wavelength conversion or light splitting, therefore, such a node provided with a wavelength converter and/or a light splitter can facilitate subsequent selection of a working path or a protection path. If nodes not on an obtained working path or protection path are occupied as few as possible in selection of a working path or a protection path, more options can be offered to subsequent selection of a working path or a protection path. Accordingly, the above technical means can further improve the possibility of successful building of a working tree and a protection tree and lower the blocking probability in the network.

It can be seen from the above that in the embodiments of the invention, if possible, a node provided with a wavelength converter and/or a light splitter is preferably selected as a node in a working path or a protection path. If such node is occupied as could as possible in subsequent selection of a working path or a protection path, whether a subsequent node not on an obtained working path or protection path is provided with a wavelength converter or a light splitter or not will have little influence upon successful building of a working tree and a protection tree, and therefore the embodiments of the invention can be applied in a context of sparse configuration.

### Brief Descriptions of the Drawings

Figure 1 is a schematic diagram of multicast data transmission;
Figure 2A is a schematic diagram of a working tree which is built for data transmission illustrated in Figure 1 through the link-disjoint dual-tree protection method;
Figure 2B is a schematic diagram of a protection tree which is built for data transmission illustrated in Figure 1 through the link-disjoint dual-tree protection method;
Figure 3 is a schematic diagram of another multicast data transmission;
Figure 3A is a schematic diagram of a working tree which is built for data transmission illustrated in Figure 3 through the link-disjoint dual-tree protection method;
Figure 4 is a flow chart according to an embodiment of the invention;
Figure 5A is a schematic diagram of a working tree from the node s to the node d1 in Figure 3 built according to an embodiment of the invention;
Figure 5B is a schematic diagram of a protection tree built for data transmission illustrated in Figure 3 according to an embodiment of the invention;
Figure 5C is a schematic diagram of a working tree built for data transmission illustrated in Figure 3 according to an embodiment of the invention;
Figure 6A is a physical topology diagram of a network;
Figure 6B is an auxiliary graph of Figure 6A;
Figure 7 is a network topology diagram for simulation according to an embodiment of the invention;
Figure 8 is a simulation effect diagram of blocking probabilities in the network with respect to identically provided light splitters and wavelength converters and different numbers of nodes;
Figure 9 is a simulation effect diagram of blocking probabilities in the network with respect to different numbers of light splitters; and
Figure 10 is a simulation effect diagram of blocking probabilities in the network with respect to different numbers of wavelength converters.

### Detailed Descriptions of the Embodiments

Preferred embodiments of the invention will be described in detail hereinafter with reference to the drawings. Firstly, it should be noted that terms, words and meaning of the claims in the invention should not be interpreted as being limited to literal and general meaning thereof, but also encompass meaning and concepts in compliance with the technologies in the invention, because the inventors shall give appropriate definitions of the terms for best descriptions of the invention. Accordingly, arrangements stated in the description and the drawings are merely illustrative of the preferred embodiments of the invention but not exhaustive of all technical features of the invention. It should be appreciated that there may be various equivalent or modified solutions which can replace solutions of the invention.

The solutions of the invention will be firstly described. Figure 4 is a flow chart according to an embodiment of the invention. As illustrated in Figure 4, a multicast protection method in a WDM optical network according to an embodiment of the invention includes the following steps.

At step S401, a working path from a source node to one destination node is obtained.

There may be a plurality of destination nodes involved in a multicast service. At first, a working path from the source node to a randomly selected destination node may be obtained, alternatively, a working path from the source node to a destination node, at which the data transmitted from the source node arrives firstly, may be obtained.

There may be a plurality of candidate working paths present from the source node to a destination node. A candidate working path refers to any path from the source node to the destination node, which can be used as a working path, and includes any path from the source node to the destination node, which has not been determined as a protection path. In the present embodiment, the first shortest working path is selected among all candidate working paths from the source node to the destination node as a working path from the source node to the destination node. Here, the first shortest working path refers to one with the lowest cost among all candidate working paths from the source node to the destination node. The cost may refer to a distance from the source node to the destination node, and may also refer to a cost of transmission taken per unit traffic.

Before a working path from the source node to one destination node is obtained, if no working path from the source node to another destination node is obtained, the shortest path can be selected among all paths from the source node to the one destination node as a working path from the source node to the one destination node. Before a working path from the source node to one destination node is obtained, if at least one working path from the source node to other destination node has been obtained, costs of candidate working paths from all nodes on the obtained working path to the one destination node can be calculated, here, the candidate working path with the lowest cost is referred to as the second shortest working path, such a node on the obtained working path that the candidate working path from the destination node to this node has the lowest cost is referred to as the source node of the second shortest working path, and a working path from the source node to the source node of the second shortest working path and the second shortest working path are combined into the working path from the source node to the one destination node.

In addition, wavelength resource function as a carrier for data transmission in the optical network, and each wavelength resource is used for transmission of data from the source node to only one destination node. However, if a node is provided with a wavelength converter, data received over a wavelength resource by the node can proceed with transmission over a wavelength resource of another wavelength, thus options of working paths from the source node to the destination node is increased. Similarly, if a node is provided with a light splitter, data received over one wavelength resource by the node can be transmitted over a plurality of wavelength resources of the same wavelength, thus options of working paths from the source node to the destination node may be also increased. Consequently, the source node and/or the source node of the second shortest working path can be provided with a wavelength converter and/or a light splitter; in other words, before a working path from the source node to one destination node is obtained, if at least one working path from the source node to other destination node has been obtained, costs of candidate working paths from the one destination node to all nodes on the obtained working path which are provided with wavelength converters and/or light splitters can be calculated, thereby the shortest working path is selected.

If only the first shortest working path is selected as a working path from the source node to a destination node at first, it is possible to occupy network resources as few as possible, and more options can be offered for subsequent obtainment of a corresponding protection path and subsequent obtainment of a further working path and a further protection path. Thus, the blocking probability in the network can be lowered.

If most of nodes on the selected working path are nodes provided with wavelength converters and/or light splitters, options for subsequent selection of a working path and a protection path can be increased, and the blocking probability in the network can be further lowered.

At step S402, a protection path corresponding to the working path is obtained.

In the present embodiment, each time one working path is obtained, subsequently a protection path corresponding to the working path is calculated. A corresponding protection path refers to a path with the same source node and destination node as a working path, and all links on the protection link are separate from those on the working path.

There may be a plurality of candidate protection paths from the source node to the same one destination node. A candidate protection path refers to any path from the source node to the destination node, which can be used as a protection path, and includes any path from the source node to the destination node, which has not been determined as a working path. In the present embodiment, the first shortest protection path is selected among all candidate protection paths from the source node to the destination node as a protection path from the source node to the destination node. Here, the first shortest protection path refers to one with the lowest cost among all candidate protection paths from the source node to the destination node. The cost may refer to a distance from the source node to the destination node, and may also refer to a cost of transmission taken per unit traffic.

Before a protection path from the source node to one destination node is obtained, if at least one protection path from the source node to other destination node has been obtained, costs of candidate protection paths from all nodes on the obtained protection path to the one destination node can be calculated, here, the candidate protection path with the lowest cost is referred to as the second shortest protection path, such a node on the obtained protection path that the candidate protection path from the destination node to this node has the lowest cost is referred to as the source node of the second shortest protection path, and a protection path from the source node to the source node of the second shortest protection path and the second shortest protection path are combined into the protection path from the source node to the destination node.

In addition, wavelength resource function as a carrier for data transmission in the optical network, and each wavelength resource is used for transmission of data from the source node to only one destination node. However, if a node is provided with a wavelength converter, data received over a wavelength resource by the node can proceed with transmission over a wavelength resource of another wavelength, thus options of protection paths from the source node to the destination node is increased. Similarly, if a node is provided with a light splitter, data received over one wavelength resource by the node can be transmitted over a plurality of wavelength resources of the same wavelength, thus options of protection paths from the source node to the destination node may be also increased. Consequently, the source node and/or the source node of the second shortest protection path can be provided with a wavelength converter and/or a light splitter; in other words, before a protection path from the source node to one destination node is obtained, if at least one protection path from the source node to other destination node has been obtained, costs of candidate protection paths from the one destination node to all nodes on the obtained protection path which are provided with wavelength converters and/or light splitters can be calculated, thereby the shortest protection path is selected.

If only the first shortest protection path is selected as a protection path from the source node to a destination node at first, it is possible to occupy network resources as few as possible, and more options can be offered for subsequent obtainment of a working path or a protection path. Thus, the blocking probability in the network can be lowered.

If most of nodes on the selected protection path are nodes provided with wavelength converters and/or light splitters, options for subsequent selection of a working path or a protection path can be increased, and the blocking probability in the network can be further lowered.

At step S403, working paths and corresponding protection paths from the source node to other destination nodes are obtained until all the working paths and all the protection paths are built into a working tree and a protection tree respectively.

There may be a plurality of destination nodes in a multicast service. In this case, the numbers of obtained working paths and protection paths can be identical respectively to the number of the destination nodes. However, it shall be ensured that once a working path is obtained, a protection path corresponding to the working path is calculated; then a working path from the source node to another destination node is obtained; likewise, a working path and a protection path from the source node to each of all the other destination nodes are obtained. Further, once a working path is obtained, the working path can be added to a working tree which is built with all working paths obtained previously; likewise, once a protection path is obtained, the protection path can be added to a protection tree which is built with all protection paths obtained previously, in this way, all working paths and all protection paths are built into the working tree and the protection tree respectively. Here, in the working tree and the protection tree, the source node is taken as the root node, the destination nodes are taken as leaf nodes, and links on a working path and a protection path are taken as edges. During the adding of a working path or a protection path to the working tree or the protection tree, if some link on the working path or the protection path is identical to that already added to the working tree or the protection tree, only those links not added yet to the working tree or the protection tree need to be added to the working tree or the protection tree.

If a working tree consisted of working paths from the source node to all the destination nodes and a protection tree consisted of protection paths from the source node to all the destination nodes are obtained, it means that protection routings from the source node to all the destination nodes have been built. If a failure of any link on the working tree causes a working path including the link to fail, data transmitted over the failed working path can be switched to a corresponding protection path in the protection tree for transmission.

It shall be noted that in the present embodiment, links on all the working paths can be totally separate from those on all the protection paths, in other words, it can be ensured that no link on the working paths is identical to that on the protection paths, thus ensuring the recovery of transmission of data failing to be transmitted due to a failure of a working path.

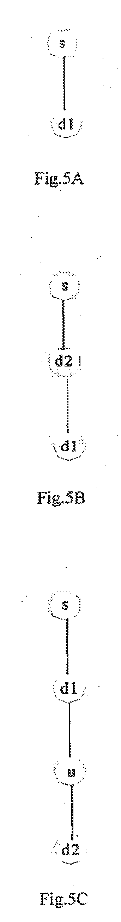

Taking Figure 3 now as an example, the method according to an embodiment of the invention will be described. For multicast data transmission as illustrated in Figure 3A, a working tree and a protection tree can be built in the follow steps:
a working path from the node s to the node d1 is selected firstly. Among all paths from the node s to the node d1, the shortest path s->d1 is selected as the working path from the node s to the node d1, and a working tree as illustrated in Figure 5A is built, with the node s taken as the root node, the node d1 taken as a leaf node and the link on path s->d1 taken as an edge;
a protection path from the node s to the node d1 is selected. Because the path s->d1 has been used as a working path, and the path s->d2->d1 among the remaining paths from the node s to the node d1 has the lowest cost, the path s->d2->d1 is used as a protection path from the node s to the node d1, and a protection tree as illustrated in Figure 5B is built, with the node s taken as a root node, the nodes d2 and d1 taken as leaf nodes and the links on path s->d2 and path s->d1 taken as edges;
a working path from the node d1 to the node d2 is selected starting from the node d1. Because the path d1->d2 has been used as a protection path, only the path d1->u->d2 may be used as a working path from the node d1 to the node d2. Therefore, the working path from the node s to the node d2 is path s->d1->u->d2, and is added into the working tree as illustrated in Figure 5A, resulting in a new working tree built, as illustrated in Figure 5C. At this point, the working tree as illustrated in Figure 5C is the resultant working tree built;
a protection path from the node s to the node d2 is selected. Because a protection path s->d2 from the node s to the node d2 already exists, the protection tree as illustrated in Figure 5B is the resultant protection tree built.

The following algorithm can be used to implement the embodiment of the invention.

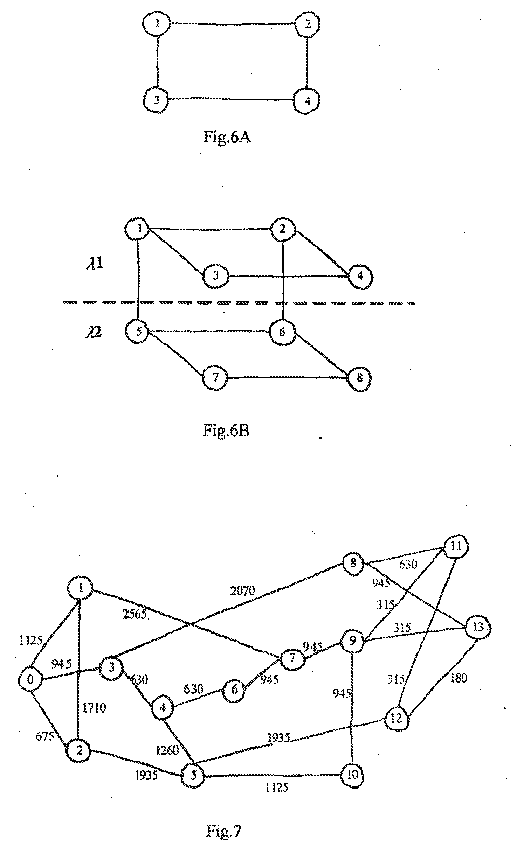

Signs and terms involved in the algorithm are defined firstly as follows.
*G(N, L)*: a given physical topology of the network, where *N* denotes a set of nodes, *L* denotes a set of links each of which is an optical fiber for bidirectional transmission.
*W*: the number of wavelengths over each optical fiber.
*WCⱼ*: provision of a wavelength converter at node *j*; if the node *j* is provided with a wavelength converter, *WCⱼ* is 1; otherwise *WCⱼ* is 0.
*MCⱼ*: provision of a light splitter at node *j*; if the node *j* is provided with a light splitter, *MCⱼ* is 1; otherwise *MCⱼ* is 0.
*LG(N, E)*; an auxiliary graph of the network, where *N* denotes a set of nodes in the auxiliary graph, and *E* denotes a set of edges in the auxiliary graph; depending on the physical topology *G(N, L)* of the network and the *WCⱼ* indicating provision of a wavelength converter at a node, the auxiliary graph *LG(N, E)* is constructed as follows:
W duplications of the physical topology *G(N, L)* of the network is obtained, to form a *W*-layer hierarchical network;
for a node provided with a wavelength converter, the corresponding nodes at respective layers are connected via edges having a weight of 0. For example, if the node *j* is provided with a wavelength converter, and the nodes at the respective layers corresponding to the node *j* are denoted by *j*^{λ} (0≤λ≤W), nodes *j*^{λ*1*} and *j*^{λ*2*} (0≤λ₁≠λ₂≤W) are connected via an edge having a weight of 0. As illustrated in Figures 6A and 6B, Figure 6A shows a physical topology of the network in which each link is provided with two wavelengths, and the nodes 1 and 2 in the network are provided with wavelength converters, in this case, the corresponding auxiliary graph is what shown in Figure 6B.
*{s*, *D}*: a multicast service request; where *s* denotes a source node for the multicast service, *D* denotes a set of destination nodes for the multicast service, and Φ denotes a null set.
*T_{w}*: a working tree.
*Tₚ*: a protection tree.
*V_{w}*: a set of nodes capable of branching on a working tree, including two types of nodes, one of which includes nodes on the working tree which are provided with light splitters, and the other includes branch and/or leaf nodes on the working tree.
*Vₚ*: a set of nodes capable of branching on a protection tree, including two types of nodes, one of which includes nodes provided with light splitters on the protection tree, and the other includes branch and/or leaf nodes on the protection tree.
*N_{w}*: a set of nodes on a working tree.
*Nₚ*: a set of nodes on a protection tree.
*D**: a set of nodes not included in the set of destination nodes *D*.
*P_{i,j}*: the shortest path between nodes *i* and *j*.
*Cₚ*: the cost of path *p*, which can be the distance, or the cost of transmission taken per unit traffic.

It is assumed that the network is centralizedly controlled, and the auxiliary graph *LG*(*N*, *E)* is maintained by a control center according to dynamic arrival or departure of a multicast service at or from the network. The following steps are carried out when a multicast service request *{s*, *D}* reaches the network.
(1) Variables are initialized so that *D**=*D*, *V_{w}*={*s*}, *Vp={s}*, *T_{w}*=Φ, *Tₚ*=Φ, *N_{w}*={*s*}, *Nₚ*=*{s}.*
(2) If the calling source node s is not provided with a wavelength converter, the nodes at respective layers of the auxiliary graph *LG(N, E)* which are corresponding to the node s are connected via edges with a weight of 0; otherwise the algorithm proceeds to (3).
(3) If *D**=Φ, the algorithm ends; otherwise the algorithm proceeds to (4).
(4) A pair of link-disjoint shortest paths *p*_{*d*, *m*} and *p*_{*d*, *n*} are calculated, where *d* ∈ *D**, *m* ∈*V_{w}*, *n* ∈*Vₚ*. For given *d* ∈ *D**, a pair of link-disjoint shortest paths from the node *d* to the *V_{w}* and the *Vp* are calculated as follows:
   the shortest path *p_{d, m}* from the node *d* to the *V_{w}* is calculated. If the node *d* is on the *T_{w}, Cp_{d}*, *ₘ*=0; otherwise all links on the *Tₚ* are deleted, and the shortest path *p*_{*d*, *m*} from the node *d* to the *V_{w}* is calculated through the Dijkstra algorithm;
   the shortest path *p*_{*d*, *n*} from the node *d* to the *Vp* is calculated. If the node *d* is on the *Tₚ, Cp*_{*d*, *n*}=0; otherwise all links on the *T_{w}* and *p_{dj,m}* are deleted, and the shortest path *p*_{*d*, *n*} from the node *d* to the *Vₚ* is calculated through the Dijkstra algorithm.
(5) It is determined through calculation whether the pair of paths *p*_{*d*, *m*} and *p*_{*d*, *n*} constitute a loop. If the pair of paths *p*_{*d*, *m*} and *p*_{*d*, *n*} constitute a loop, there may exist two cases, in one of which the node *d* is provided with a wavelength converter, and in the other of which both of the paths access the node *d* through the same wavelength plane.
(6) The pair of paths *p_{d, m}* and *p*_{*d*, *n*} are stored. All nodes on *p*_{*d*, *m*} and *p*_{*d*, *n*} are put into *N_{w}* and *Nₚ* respectively, and all the nodes provided with light splitters on *p_{d, m}* and *p_{d, n}* are put into *V_{w}* and *Vₚ* respectively. If *p_{d, m}* and *p_{d n}* constitute a loop, all the nodes provided with light splitters on paths *p_{d, m}* and *p_{d, n}* are put into *Vp* and *V_{w}* respectively.
(7) The node *d* is removed from *D**, and the algorithm proceeds to step (3).

Through the above algorithm, a working tree and a protection tree can be obtained.

The above algorithm utilizes an auxiliary graph model which can carries out wavelength assignment together with routing calculation. However in the case of a relatively large number of network nodes and wavelength resources, the auxiliary graph has a relatively large scale, and the number of nodes in the auxiliary graph can be up to *N²W²*, where *N* is the number of network nodes and W is the number of wavelength resources. Without the use of the auxiliary graph model, a routing can be calculated firstly in the physical topology of the network, and then a wavelength assignment method is carried out. If wavelength assignment fails, this routing is discarded, and routing calculation can be performed again.

Relative to routing calculation in a general optical network, the following specific constraints are present in the WDM optical network.
(1) A wavelength continuity constraint: path calculation is closely related to wavelength selection under this constraint; the routing calculation under this constraint is referred to as Routing and Wavelength Assignment (RWA), and the corresponding optical tree calculation is referred to as Multicast RWA (MC-RWA).
(2) A constraint of sparse configuration of light splitting devices: the sparse configuration means that only a part of nodes in the WDM optical network can act as branching nodes of a multicast tree, in other words, that only a part of the nodes are provided with wavelength converters or light splitters. Thus, a conventional solution based upon the Steiner Tree (i.e., to obtain an optimum span sub-tree for covering a subset of the set of network nodes) can not be used in the optical tree calculation.

The above two constraints shall be taken into account in building of multicast routing. It should be appreciated that these constraint conditions shall also been taken into account in studying multicast routing protection in the optical network.

In selection of a working path or a protection path from a source node to a destination node according to the embodiment of the invention, if possible, a node provided with a wavelength converter or a light splitter is first used, so that more options can be offered for subsequent selection of a path. Therefore, the invention relates to not only the wavelength selection, but also to the routing calculation in sparse configuration.

Further, multicast protection can be categorized into dynamic protection and static protection. The static protection requires that for a given set of multicast requests, routes and corresponding resource configuration scheme satisfying these requirements shall be obtained, and it should be ensured that the 100% recovery can be achieved for any multicast connection influenced due to a failure of any single link. The dynamic protection requires that for one multicast request, sufficient link resources shall be reserved in establishing a multicast routing for the multicast request, so as to ensure the 100% recovery upon failure of a single link.

For the given set of multicast requests in the dynamic protection, a route for one multicast request can be calculated firstly according to the embodiment of the invention, then a route for another multicast request is calculated according to the embodiment of the invention, likewise, the calculation of protection routes for all the multicast requests is carried out.

The relevant simulation experiments have been conducted with respect to the embodiments of the invention, in order to demonstrate that the methods according to the embodiments of the invention can low the blocking probability in the network. A network topology for simulation is as illustrated in Figure 7, where each edge is an optical fiber for bidirectional transmission, a numerical value on the edge indicates a cost of the edge, and there are 16 wavelength resources over each optical fiber link.

A dynamic multicast service model is used for the simulation. Dynamic multicast traffic arriving at the network complies with the Poisson distribution. In other words, the time interval of the arrivals of two subsequent multicast services at the network complies with the negative exponential distribution, and duration of each multicast service complies with a negative exponential distribution. Upon arrival of a multicast service at the network, a multicast protection route for the multicast service is calculated with the link-disjoint dual-tree protection method and the methods provided according to the embodiments of the invention respectively. If the calculation with route algorithm is performed successfully, network resources are assigned, which are not released until the call is ended; and if the calculation with the route algorithm fails, the call is blocked.

The simulation is mainly intended to examine, in the case of the same network configuration and the same traffic intensity, the blocking probabilities in the network to evaluate the performance of the protection methods.

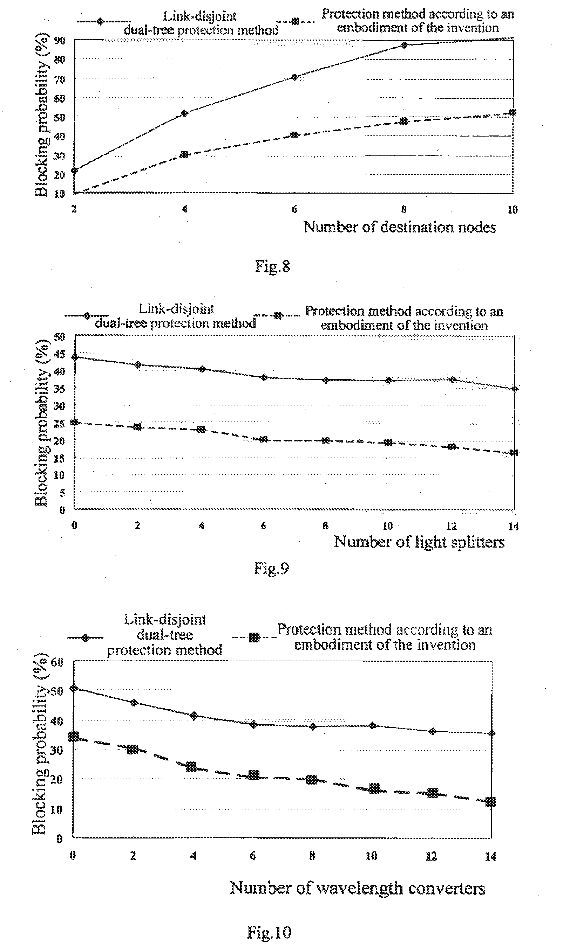

Firstly, the blocking probabilities in the network with respect to identically provided light splitters and wavelength converters and different numbers of nodes are examined. Particularly in the network, 50% of nodes (i.e., 7 nodes) are provided with light splitters, and 50% of nodes (i.e., 7 nodes) are provided with wavelength converters. The nodes provided with the light splitters and the nodes provided with the wavelength converters are distributed randomly. 50 thousands of calls are made with the call intensity of 20 Erlang at each light splitter and wavelength converter respectively in the case of different numbers of nodes, and the blocking probabilities for five different distributions are averaged, thus obtaining a simulation result illustrated in Figure 8. The solid line in Figure 8 represents the link-disjoint dual-tree protection method, and the broken line therein represents the method provided according to the embodiment of the invention. As can be seen from Figure 8, under the condition of the same numbers of destination nodes, the blocking probability in the network for the method according to an embodiment of the invention is lower than that for the link-disjoint dual-tree protection method.

Secondly, the blocking probabilities in the network with respect to different numbers of light splitters are examined. Particularly in the network, 50% of nodes are provided with wavelength converters, the number of the light splitters ranges from 0 to 14, and the wavelength converters and the light splitters are distributed randomly. The number of destination nodes of each multicast call is 3, and the destination nodes are distributed randomly. For configurations of different numbers of light splitters, 50 thousands of calls are made with the call intensity of 20 Erlang in the case that the wavelength converters and the light splitters are distributed randomly. The blocking probabilities for five different configurations are averaged, thus obtaining a simulation result illustrated in Figure 9. The solid line in Figure 9 represents the link-disjoint dual-tree protection method, and the broken line therein represents the method provided according to an embodiment of the invention. As can be seen from Figure 9, under the condition of the same numbers of light splitters, the blocking probability in the network for the method according to an embodiment of the invention is lower than that for the link-disjoint dual-tree protection method.

Thirdly, the blocking probabilities in the network with respect to different numbers of wavelength converters are examined. Particularly in the network, 50% of nodes are provided with light splitters, the number of the wavelength converters ranges from 0 to 14, and the wavelength converters and the light splitters are distributed randomly. The number of destination nodes of a multicast call is 3, and the destination nodes are distributed randomly. For configurations of different numbers of light splitters, 50 thousands of calls are made with the call intensity of 20 Erlang in the case that the wavelength converters and the light splitters are distributed randomly. The blocking probabilities for 5 different configurations are averaged, thus obtaining a simulation result illustrated in Figure 10. The solid line in Figure 10 represents the link-disjoint dual-tree protection method, and the broken line therein represents the method according to an embodiment of the invention. As can be seen from Figure 10, under the condition of the same numbers of wavelength converters, the blocking probability in the network for the method according to an embodiment of the invention is lower than that for the link-disjoint dual-tree protection method.

As can be apparent from the above three simulation results, the blocking probability in the network for the method according to an embodiment of the invention can be considerably lowered relative to that for the link-disjoint dual-tree protection method.

The foregoing descriptions are merely illustrative of the preferred embodiments of the invention. It shall be noted that modifications and variations can be made by those skilled in the art without departing from the scope of the invention.

## Claims

1. A multicast protection method for a WDM optical network, **characterized by** comprising:
obtaining a working path from a source node to one of destination nodes (S401);
obtaining a protection path corresponding to the working path (S402); and
repeating the above steps until working paths and corresponding protection paths from the source node to all the destination nodes are obtained;
wherein if at least one working path between the source node and another destination node has been obtained, the process of obtaining a working path from the source node to the one of destination nodes comprises:
selecting a shortest working path among candidate working paths from all nodes on the obtained at least one working path between the source node and another destination node to the one of destination nodes, and a source node of the shortest working path, wherein the shortest working path is a candidate working path with the lowest cost among the candidate working paths from all the nodes on the obtained at least one working path between the source node and another destination node to the one of destination nodes, and the source node of the shortest working path is such a node on the obtained at least one working path between the source node and another destination node that the candidate working path from the node of the shortest working path to the one of destination nodes has the lowest cost; and
combining the shortest working path and a working path from the source node to the source node of the shortest working path into the working path from the source node to the one of destination nodes.

2. The multicast protection method for a WDM optical network according to claim 1, wherein the source node and/or the source node of the second shortest working path are/is provided with a wavelength converter and/or a light splitter.

3. The multicast protection method for a WDM optical network according to claim 1, wherein if at least one protection path between the source node and another destination node has been obtained, process of obtaining a protection path corresponding to the working path comprises:
selecting the shortest protection path among candidate protection paths from all nodes on the obtained protection path between the source node and another destination node to the one of destination nodes, and a source node of the shortest protection path, wherein the shortest protection path is a candidate protection path with the lowest cost among the candidate protection paths from all the nodes on the obtained protection path between the source node and another destination node to the one of destination nodes, and the source node of the shortest protection path is such a node on the obtained protection path between the source node and another destination node that the candidate protection path from the source node of the shortest protection path to the one of destination nodes has the lowest cost;
combining the shortest protection path and a protection path from the source node to the source node of the shortest protection path into the protection path from the source node to the destination node.

4. The multicast protection method for a WDM optical network according to claim 3, wherein the source node and/or the source node of the shortest protection path are/is provided with a wavelength converter and/or a light splitter.

5. The multicast protection method for a WDM optical network according to claim 1, wherein after obtaining a first working path, the method further comprises:
building a working tree; thereafter, each time a working path from the source node to one destination node is obtained, the obtained working path is added to the working tree.

6. The multicast protection method for a WDM optical network according to claim 1, wherein after obtaining a first protection path, the method further comprises:
building a protection tree; and after a protection path from the source node to one destination node is obtained, the obtained protection path is added to the protection tree.

7. The multicast protection method for a WDM optical network according to claim 1, wherein links on the working paths from the source node to all the destination nodes are separate from links on the protection path from the source node to all the destination nodes.

8. A multicast protection device for a WDM optical network, **characterized by** comprising:
a path obtaining element adapted to obtain a working path from a source node to a destination node and a protection path corresponding to the working path, wherein if at least one working path between the source node and another destination node has been obtained, process of obtaining a working path from the source node to the one of destination nodes comprises: selecting a shortest working path among candidate working paths from all nodes on the obtained at least one working path between the source node and another destination node to the one of destination nodes, and a source node of the shortest working path, wherein the shortest working path is a candidate working path with the lowest cost among the candidate working paths from all the nodes on the obtained at least one working path between the source node and another destination node to the one of destination nodes, and the source node of the shortest working path is such a node on the obtained at least one working path between the source node and another destination node that the candidate working path from the source node of the shortest working path to the one of destination nodes has the lowest cost; and combining the shortest working path and a working path from the source node to the source node of the shortest working path into the working path from the source node to the one of destination nodes; and
a completion determining element adapted to determine whether working paths and corresponding protection paths from the source node to all destination nodes have been obtained, terminate the operation if working paths and corresponding protection paths from the source node to all destination nodes have been obtained; otherwise, instruct the path obtaining element to proceed to a destination node in a multicast service, for which no path has been obtained.

9. The multicast protection device for a WDM optical network according to claim 8, further comprising a working tree building and maintaining element adapted to build a working tree according to a working path or add a working path to the working tree after the working path is obtained by the path obtaining element.

10. The multicast protection device for a WDM optical network according to claim 8 or 9, further comprising a protection tree building and maintaining element adapted to build a protection tree according to a protection path or add a protection path to the protection tree after the protection path is obtained by the path obtaining element.

11. The multicast protection device for a WDM optical network according to claim 8, wherein the device is located in a node of the network, where the node further comprises a wavelength converter and/or a light splitter.

## Patentansprüche

1. Multicast-Sicherungsverfahren für ein optisches WDM-Netz, **dadurch gekennzeichnet, dass** es umfasst:
Einholen eines Arbeitspfads von einem Ursprungsknoten zu einem von Zielknoten (S401);
Einholen eines Sicherungspfads, der dem Arbeitspfad entspricht (S402); und
Wiederholen der vorstehenden Schritte, bis Arbeitspfade und entsprechende Sicherungspfade vom Ursprungsknoten zu allen der Zielknoten eingeholt sind;
wobei, wenn mindestens ein Arbeitspfad zwischen dem Ursprungsknoten und einem anderen Zielknoten eingeholt wurde, der Prozess des Einholens eines Arbeitspfads vom Ursprungsknoten zu dem einen von Zielknoten umfasst:
Auswählen eines kürzesten Arbeitspfads unter Kandidaten-Arbeitspfaden von allen Knoten auf dem eingeholten mindestens einen Arbeitspfad zwischen dem Ursprungsknoten und einem anderen Zielknoten zu dem einen von Zielknoten und eines Ursprungsknotens des kürzesten Arbeitspfads, wobei der kürzeste Arbeitspfad ein Kandidaten-Arbeitspfad mit den niedrigsten Kosten unter den Kandidaten-Arbeitspfaden von allen Knoten auf dem eingeholten mindestens einen Arbeitspfad zwischen dem Ursprungsknoten und einem anderen Zielknoten zu dem einen von Zielknoten ist, und der Ursprungsknoten des kürzesten Arbeitspfads solch ein Knoten auf dem eingeholten mindestens einen Arbeitspfad zwischen dem Ursprungsknoten und einem anderen Zielknoten ist, dass der Kandidaten-Arbeitspfad vom Knoten des kürzesten Arbeitspfads zu dem einen von Zielknoten die niedrigsten Kosten aufweist; und
Kombinieren des kürzesten Arbeitspfads und eines Arbeitspfads vom Ursprungsknoten zum Ursprungsknoten des kürzesten Arbeitspfads in den Arbeitspfad vom Ursprungsknoten zu dem einen von Zielknoten.

2. Multicast-Sicherungsverfahren für ein optisches WDM-Netz nach Anspruch 1, wobei der Ursprungsknoten und/oder der Ursprungsknoten des zweitkürzesten Arbeitspfads mit einem Wellenlängenwandler und/oder einem Lichtteiler versehen ist/sind.

3. Multicast-Sicherungsverfahren für ein optisches WDM-Netz nach Anspruch 1, wobei, wenn mindestens ein Sicherungspfad zwischen dem Ursprungsknoten und einem anderen Zielknoten eingeholt wurde, der Prozess des Einholens eines Sicherungspfads, der dem Arbeitspfad entspricht, umfasst:
Auswählen des kürzesten Sicherungspfads unter Kandidaten-Sicherungspfaden von allen Knoten auf dem eingeholten Sicherungspfad zwischen dem Ursprungsknoten und einem anderen Zielknoten zu dem einen von Zielknoten und eines Ursprungsknotens des kürzesten Sicherungspfads, wobei der kürzeste Sicherungspfad ein Kandidaten-Sicherungspfad mit den niedrigsten Kosten unter den Kandidaten-Sicherungspfaden von allen Knoten auf dem eingeholten Sicherungspfad zwischen dem Ursprungsknoten und einem anderen Zielknoten zu dem einen von Zielknoten ist, und der Ursprungsknoten des kürzesten Sicherungspfads solch ein Knoten auf dem eingeholten Sicherungspfad zwischen dem Ursprungsknoten und einem anderen Zielknoten ist, dass der Kandidaten-Sicherungspfad vom Ursprungsknoten des kürzesten Sicherungspfads zu dem einen von Zielknoten die niedrigsten Kosten aufweist;
Kombinieren des kürzesten Sicherungspfads und eines Sicherungspfads vom Ursprungsknoten zum Ursprungsknoten des kürzesten Sicherungspfads in den Sicherungspfad vom Ursprungsknoten zum Zielknoten.

4. Multicast-Sicherungsverfahren für ein optisches WDM-Netz nach Anspruch 3, wobei der Ursprungsknoten und/oder der Ursprungsknoten des kürzesten Sicherungspfads mit einem Wellenlängenwandler und/oder einem Lichtteiler versehen ist/sind.

5. Multicast-Sicherungsverfahren für ein optisches WDM-Netz nach Anspruch 1, wobei das Verfahren nach dem Einholen eines ersten Arbeitspfads ferner umfasst:
Bilden eines Arbeitsbaums, wobei danach jedes Mal, wenn ein Arbeitspfad vom Ursprungsknoten zu einem Zielknoten eingeholt wird, der eingeholte Arbeitspfad zum Arbeitsbaum hinzugefügt wird.

6. Multicast-Sicherungsverfahren für ein optisches WDM-Netz nach Anspruch 1, wobei das Verfahren nach dem Einholen eines ersten Sicherungspfads ferner umfasst:
Bilden eines Sicherungsbaums, wobei nach dem Einholen eines Sicherungspfads vom Ursprungsknoten zu einem Zielknoten der eingeholte Sicherungspfad zum Sicherungsbaum hinzugefügt wird.

7. Multicast-Sicherungsverfahren für ein optisches WDM-Netz nach Anspruch 1, wobei Strecken auf den Arbeitspfaden vom Ursprungsknoten zu allen der Zielknoten getrennt von Strecken auf dem Sicherungspfad vom Ursprungsknoten zu allen der Zielknoten sind.

8. Multicast-Sicherungsvorrichtung für ein optisches WDM-Netz, **dadurch gekennzeichnet, dass** sie umfasst:
ein Pfadeinholungselement, ausgelegt zum Einholen eines Arbeitspfads von einem Ursprungsknoten zu einem Zielknoten und eines Sicherungspfads, der dem Arbeitspfad entspricht, wobei, wenn mindestens ein Arbeitspfad zwischen dem Ursprungsknoten und einem anderen Zielknoten eingeholt wurde, der Prozess des Einholens eines Arbeitspfads vom Ursprungsknoten zu dem einen von Zielknoten umfasst: Auswählen eines kürzesten Arbeitspfads unter Kandidaten-Arbeitspfaden von allen Knoten auf dem eingeholten mindestens einen Arbeitspfad zwischen dem Ursprungsknoten und einem anderen Zielknoten zu dem einen von Zielknoten und eines Ursprungsknotens des kürzesten Arbeitspfads, wobei der kürzeste Arbeitspfad ein Kandidaten-Arbeitspfad mit den niedrigsten Kosten unter den Kandidaten-Arbeitspfaden von allen Knoten auf dem eingeholten mindestens einen Arbeitspfad zwischen dem Ursprungsknoten und einem anderen Zielknoten zu dem einen von Zielknoten ist, und der Ursprungsknoten des kürzesten Arbeitspfads solch ein Knoten auf dem eingeholten mindestens einen Arbeitspfad zwischen dem Ursprungsknoten und einem anderen Zielknoten ist, dass der Kandidaten-Arbeitspfad vom Ursprungsknoten des kürzesten Arbeitspfads zu dem einen von Zielknoten die niedrigsten Kosten aufweist; und Kombinieren des kürzesten Arbeitspfads und eines Arbeitspfads vom Ursprungsknoten zum Ursprungsknoten des kürzesten Arbeitspfads in den Arbeitspfad vom Ursprungsknoten zu dem einen von Zielknoten; und
ein Beendigungsbestimmungselement, das so ausgelegt ist, dass es bestimmt, ob Arbeitspfade und entsprechende Sicherungspfade vom Ursprungsknoten zu allen Zielknoten eingeholt wurden, den Betrieb beendet, wenn Arbeitspfade und entsprechende Sicherungspfade vom Ursprungsknoten zu allen Zielknoten eingeholt wurden; andernfalls das Pfadeinholungselement anweist, zu einem Zielknoten in einem Multicast-Dienst überzugehen, für welchen kein Pfad eingeholt wurde.

9. Multicast-Sicherungsvorrichtung für ein optisches WDM-Netz nach Anspruch 8, ferner umfassend ein Arbeitsbaumbildungs- und -pflegeelement, das so ausgelegt ist, dass es einen Arbeitsbaum gemäß einem Arbeitspfad bildet oder einen Arbeitspfad nach dem Einholen des Arbeitspfads durch das Pfadeinholungselement zum Arbeitsbaum hinzufügt.

10. Multicast-Sicherungsvorrichtung für ein optisches WDM-Netz nach Anspruch 8 oder 9, ferner umfassend ein Sicherungsbaumbildungs- und -pflegeelement, das so ausgelegt ist, dass es einen Sicherungsbaum gemäß einem Sicherungspfad bildet oder einen Sicherungspfad nach dem Einholen des Sicherungspfads durch das Pfadeinholungselement zum Sicherungsbaum hinzufügt.

11. Multicast-Sicherungsvorrichtung für ein optisches WDM-Netz nach Anspruch 8, wobei sich die Vorrichtung in einem Knoten des Netzes befindet, wobei der Knoten ferner einen Wellenlängenwandler und/oder einen Lichtteiler umfasst.

## Revendications

1. Procédé de protection de multidiffusion pour un réseau optique WDM, **caractérisé en ce qu'**il comprend les étapes suivantes :
obtenir un chemin de travail depuis un noeud source vers un des noeuds de destination (S401);
obtenir un chemin de protection correspondant au chemin de travail (S402) ; et
répéter les étapes ci-dessus jusqu'à ce que les chemins de travail et des chemins de protection correspondants depuis le noeud source vers tous les noeuds de destination soient obtenus ;
où, si au moins un chemin de travail entre le noeud source et un autre noeud de destination a été obtenu, le processus d'obtention d'un chemin de travail depuis le noeud source vers l'un des noeuds de destination comprend les étapes suivantes :
sélectionner un chemin de travail le plus court parmi des chemins de travail candidats depuis tous les noeuds sur l'au moins un chemin de travail obtenu entre le noeud source et un autre noeud de destination vers l'un des noeuds de destination, et un noeud source du chemin de travail le plus court, où le chemin de travail le plus court est un chemin de travail candidat avec le coût le plus faible parmi les chemins de travail candidats depuis tous les noeuds sur l'au moins un chemin de travail obtenu entre le noeud source et un autre noeud de destination vers l'un des noeuds de destination, et le noeud source du chemin de travail le plus court est un noeud tel sur l'au moins un chemin de travail obtenu entre le noeud source et un autre noeud de destination que le chemin de travail candidat depuis le noeud du chemin de travail le plus court vers l'un des noeuds de destination a le coût le plus faible ; et
combiner le chemin de travail le plus court et un chemin de travail depuis le noeud source vers le noeud source du chemin de travail le plus court dans le chemin de travail depuis le noeud source vers l'un des noeuds de destination.

2. Procédé de protection de multidiffusion pour un réseau optique WDM selon la revendication 1, dans lequel le noeud source et/ou le noeud source du deuxième chemin de travail le plus court sont pourvus d'un convertisseur de longueur d'onde et/ou d'un séparateur de lumière.

3. Procédé de protection de multidiffusion pour un réseau optique WDM selon la revendication 1, dans lequel si au moins un chemin de protection a été obtenu entre le noeud source et un autre noeud de destination, le processus d'obtention d'un chemin de protection correspondant au chemin de travail comprend les étapes suivantes :
sélectionner le chemin de protection le plus court parmi des chemins de protection candidats depuis tous les noeuds sur le chemin de protection obtenu entre le noeud source et un autre noeud de destination vers l'un des noeuds de destination, et un noeud source du chemin de protection le plus court, où le chemin de protection le plus court est un chemin de protection candidat avec le coût le plus bas parmi les chemins de protection candidats depuis tous les noeuds sur le chemin de protection obtenu entre le noeud source et un autre noeud de destination vers l'un des noeuds de destination, et le noeud source du chemin de protection le plus court est un noeud tel sur le chemin de protection obtenu entre le noeud source et un autre noeud de destination que le chemin de protection candidat depuis le noeud source du chemin de protection le plus court vers l'un des noeuds de destination a le coût le plus faible ;
combiner le chemin de protection le plus court et un chemin de protection depuis le noeud source vers le noeud source du chemin de protection le plus court dans le chemin de protection depuis le noeud source vers le noeud de destination.

4. Procédé de protection de multidiffusion pour un réseau optique WDM selon la revendication 3, dans lequel le noeud source et/ou le noeud source du chemin de protection le plus court sont pourvus d'un convertisseur de longueur d'onde et/ou d'un séparateur de lumière.

5. Procédé de protection de multidiffusion pour un réseau optique WDM selon la revendication 1, dans lequel, après obtention d'un premier chemin de travail, le procédé comprend en outre l'étape suivante :
construire une arborescence de travail ; par la suite, à chaque fois qu'un chemin de travail depuis le noeud source vers un noeud de destination est obtenu, le chemin de travail obtenu est ajouté à l'arborescence de travail.

6. Procédé de protection de multidiffusion pour un réseau optique WDM selon la revendication 1, dans lequel, après obtention d'un premier chemin de protection, le procédé comprend en outre l'étape suivante :
construire une arborescence de protection ; et après qu'un chemin de protection depuis le noeud source vers un noeud de destination a été obtenu, le chemin de protection obtenu est ajouté à l'arborescence de protection.

7. Procédé de protection de multidiffusion pour un réseau optique WDM selon la revendication 1, dans lequel des liaisons sur les chemins de travail depuis le noeud source vers tous les noeuds de destination sont séparées des liaisons sur le chemin de protection depuis le noeud source vers tous les noeuds de destination.

8. Dispositif de protection de multidiffusion pour un réseau optique WDM, **caractérisé en ce qu'**il comprend :
un élément d'obtention de chemin conçu pour obtenir un chemin de travail depuis un noeud source vers un noeud de destination et un chemin de protection correspondant au chemin de travail, où, si au moins un chemin de travail entre le noeud source et un autre noeud de destination a été obtenu, le processus d'obtention d'un chemin de travail depuis le noeud source vers l'un des noeuds de destination comprend les étapes suivantes : sélectionner un chemin de travail le plus court parmi des chemins de travail candidats depuis tous les noeuds sur l'au moins un chemin de travail obtenu entre le noeud source et un autre noeud de destination vers l'un des noeuds de destination, et un noeud source du chemin de travail le plus court, où le chemin de travail le plus court est un chemin de travail candidat avec le coût le plus faible parmi les chemins de travail candidats depuis tous les noeuds sur l'au moins un chemin de travail obtenu entre le noeud source et un autre noeud de destination vers l'un des noeuds de destination, et le noeud source du chemin de travail le plus court est un noeud tel sur l'au moins un chemin de travail obtenu entre le noeud source et un autre noeud de destination que le chemin de travail candidat depuis le noeud source du chemin de travail le plus court vers l'un des noeuds de destination a le coût le plus faible ; et combiner le chemin de travail le plus court et un chemin de travail depuis le noeud source vers le noeud source du chemin de travail le plus court dans le chemin de travail depuis le noeud source vers l'un des noeuds de destination ; et
un élément de détermination d'achèvement, conçu pour déterminer si des chemins de travail et des chemins de protection correspondants depuis le noeud source vers tous les noeuds de destination ont été obtenus, pour terminer l'opération si des chemins de travail et des chemins de protection correspondants depuis le noeud source vers tous les noeuds de destination ont été obtenus ; sinon, pour donner pour instruction à l'élément d'obtention de chemin de poursuivre vers un noeud de destination dans un service de multidiffusion pour lequel aucun chemin n'a été obtenu.

9. Dispositif de protection de multidiffusion pour un réseau optique WDM selon la revendication 8, comprenant en outre un élément de construction et de maintenance d'arborescence de travail conçu pour construire une arborescence de travail conformément à un chemin de travail ou pour ajouter un chemin de travail à l'arborescence de travail après que le chemin de travail a été obtenu par l'élément d'obtention de chemin.

10. Dispositif de protection de multidiffusion pour un réseau optique WDM selon la revendication 8 ou la revendication 9, comprenant en outre un élément de construction et de maintenance d'arborescence de protection conçu pour construire une arborescence de protection conformément à un chemin de protection ou pour ajouter un chemin de protection à l'arborescence de protection après que le chemin de protection a été obtenu par l'élément d'obtention de chemin.

11. Dispositif de protection de multidiffusion pour un réseau optique WDM selon la revendication 8, dans lequel le dispositif est situé dans un noeud du réseau, où le noeud comprend en outre un convertisseur de longueur d'onde et/ou un séparateur de lumière.
